# EUROPEAN PATENT APPLICATION

(11) **EP 3 905 826 A1**
(43) Date of publication of application: **03.11.2021**
(21) Application number: 19905084.0
(22) Date of filing: 15.11.2019
(51) Int. Cl.: H04W 72/12

(54) **METHOD AND DEVICE FOR TRANSMITTING UPLINK RESOURCES**

(30) Priority: 25.12.2018 CN 201811596565
(71) Applicant: Beijing Unisoc Communications Technology Co., Ltd., Beijing 100083 (CN)
(72) Inventor: ZHOU, Huan, Shanghai 201203 (CN); XU, Zhikun, Shanghai 201203 (CN)
(74) Representative: Epping - Hermann - Fischer
(86) International application number: PCT/CN2019/118754
(87) International publication number: WO 2020/134681

(57) **Abstract**

Disclosed are a method and device for transmitting uplink resources. The method comprises the following steps: determining whether dynamic scheduling uplink resources and configuring authorization scheduling uplink resources overlap in a time domain; and if overlapping occurs and the service carried by the configuring authorization scheduling uplink resources has a higher priority than the service carried in the dynamic scheduling uplink resources, transmitting the configuring authorization scheduling uplink resources. Therefore, the delay-sensitive services with higher priority can be preferentially transmitted by the authorization scheduling uplink resources such that the base station can process services having higher priorities in timely fashion, thereby improving the user experience.

## Description

### CROSS-REFERENCE TO RELATED APPLICATIONS

This application claims the benefit of priority to Chinese Patent Application No. 201811596565.5, filed on December 25, 2018, and entitled "METHOD AND DEVICE FOR TRANSMITTING UPLINK RESOURCES", the entire disclosure of which is incorporated herein by reference.

### TECHNICAL FIELD

The present disclosure generally relates to communication technology field, and more particularly, to a method and a device for transmitting uplink resources.

### BACKGROUND

In the Fifth-Generation mobile communications (5G) service, in order to improve resource utilization efficiency, User Equipments (UEs) with different data transmission durations may multiplex a same time-frequency physical resource. When a UE transmits an Ultra Reliable & Low Latency Communication (URLLC) service, it takes a short period of time, which is a short time duration UE; when the UE transmits an enhanced Mobile Broadband (eMBB) service, it takes a longer period of time, which is a long time duration UE.

Currently, scheduling uplink resources may be performed in two ways in the 3rd Generation Partnership Project (3GPP): dynamic scheduling and configuring authorization scheduling. The priority of dynamic scheduling is higher than the priority of configuring authorization scheduling, in other words, when dynamic scheduling uplink resources and configuring authorization scheduling uplink resources overlap in the time domain, the UE will choose to send data on the dynamic scheduling uplink resources instead of the configuring authorization scheduling uplink resources. Therefore, if delay-sensitive services cannot be sent through dynamic scheduling uplink resources in some cases, they may not be processed in time, which affects user experience.

Therefore, a method and a device for transmitting uplink resources are needed.

### SUMMARY

Embodiments of the present disclosure may enable a base station to process higher priority services in time, thereby improving user experience. In an embodiment of the present disclosure, a method for transmitting uplink resources is provided, including: determining whether dynamic scheduling uplink resources and configuring authorization scheduling uplink resources overlap in a time domain; and if overlapping occurs and a service carried by the configuring authorization scheduling uplink resources has a higher priority than a service carried by the dynamic scheduling uplink resources, transmitting the configuring authorization scheduling uplink resources.

Optionally, transmitting the configuring authorization scheduling uplink resources includes: if the dynamic scheduling uplink resources include an aperiodic Channel State Information (CSI), multiplexing the aperiodic CSI on the configuring authorization scheduling uplink resources, and then transmitting the configuring authorization scheduling uplink resources.

Optionally, transmitting the configuring authorization scheduling uplink resources further includes: determining whether there is a physical uplink control channel which overlaps with the configuring authorization scheduling uplink resources in the time domain; and if yes, preferentially multiplexing an Uplink Control Information (UCI) in the physical uplink control channel to the configuring authorization scheduling uplink resources which carry the aperiodic CSI, and then transmitting the configuring authorization scheduling uplink resources.

Optionally, the service carried by the configuring authorization scheduling uplink resources includes: an Ultra Reliable & Low Latency Communication (URLLC).

Optionally, after determining whether the dynamic scheduling uplink resources and the configuring authorization scheduling uplink resources overlap in the time domain, the method further includes: If no, transmitting the dynamic scheduling uplink resources and the configuring authorization scheduling uplink resources respectively.

In another embodiment of the present disclosure, a method for transmitting uplink resources is provided, including: determining whether dynamic scheduling uplink resources and configuring authorization scheduling uplink resources overlap in a time domain; and if overlapping occurs and a service carried by the configuring authorization scheduling uplink resources has a higher priority than a service carried by the dynamic scheduling uplink resources, transmitting the configuring authorization scheduling uplink resources and a part of the dynamic scheduling uplink resources.

Optionally, transmitting a part of the dynamic scheduling uplink resources includes: if the dynamic scheduling uplink resources and the configuring authorization scheduling uplink resources only overlap at a front part of the dynamic scheduling uplink resources, transmitting a non-overlapping part of the dynamic scheduling uplink resources.

Optionally, transmitting a part of the dynamic scheduling uplink resources includes: if the dynamic scheduling uplink resources and the configuring authorization scheduling uplink resources only overlap at a rear part of the dynamic scheduling uplink resources, transmitting a non-overlapping part of the dynamic scheduling uplink resources.

Optionally, if the dynamic scheduling uplink resources include an aperiodic Channel State Information (CSI), transmitting the aperiodic CSI in the dynamic scheduling uplink resources.

Optionally, transmitting a part of the dynamic scheduling uplink resources includes: if the dynamic scheduling uplink resources and the configuring authorization scheduling uplink resources only overlap at a middle part of the dynamic scheduling uplink resources, transmitting a part of the dynamic scheduling uplink resources before the middle part of the dynamic scheduling uplink resources.

Optionally, transmitting the configuring authorization scheduling uplink resources and a part of the dynamic scheduling uplink resources includes: if the dynamic scheduling uplink resources include an aperiodic Channel State Information (CSI), multiplexing the aperiodic CSI on the configuring authorization scheduling uplink resources, and then transmitting the configuring authorization scheduling uplink resources.

Optionally, transmitting the configuring authorization scheduling uplink resources and a part of the dynamic scheduling uplink resources further includes: determining whether there is a physical uplink control channel which overlaps with the configuring authorization scheduling uplink resources in the time domain; and if yes, preferentially multiplexing an Uplink Control Information (UCI) in the physical uplink control channel to the configuring authorization scheduling uplink resources which carry the aperiodic CSI, and then transmitting the configuring authorization scheduling uplink resources.

Optionally, the service carried by the configuring authorization scheduling uplink resources includes: an Ultra Reliable & Low Latency Communication (URLLC).

Optionally, after determining whether the dynamic scheduling uplink resources and the configuring authorization scheduling uplink resources overlap in the time domain, the method further includes: If no, transmitting the dynamic scheduling uplink resources and the configuring authorization scheduling uplink resources respectively.

In an embodiment of the present disclosure, a device for transmitting uplink resources is provided, wherein the device includes a memory and a processor, the memory has computer instructions stored therein, and when the processor executes the computer instructions, the above method is performed.

In another embodiment of the present disclosure, a device for transmitting uplink resources is provided, wherein the device includes a memory and a processor, the memory has computer instructions stored therein, and when the processor executes the computer instructions, the above method is performed.

Embodiments of the present disclosure may provide following advantages.

In embodiments of the present disclosure, whether dynamic scheduling uplink resources and configuring authorization scheduling uplink resources overlap in a time domain is determined; and if overlapping occurs and a service carried by the configuring authorization scheduling uplink resources has a higher priority than a service carried by the dynamic scheduling uplink resources, the configuring authorization scheduling uplink resources are transmitted. Therefore, delay-sensitive services with a higher priority can be preferentially transmitted through the configuring authorization scheduling uplink resources, such that a base station can process the services with a higher priority in time, thereby improving the user experience.

Further, if the dynamic scheduling uplink resources include an aperiodic CSI, the aperiodic CSI is multiplexed on the configuring authorization scheduling uplink resources, and then the configuring authorization scheduling uplink resources which is multiplexed with the aperiodic CSI is transmitted. Therefore, the base station can receive the aperiodic CSI through the configuring authorization scheduling uplink resources, thereby obtaining propagation characteristics of a communication link; that is, the aperiodic CSI is carried by the configuring authorization scheduling uplink resources which is preferentially transmitted, which facilitates providing communications with high reliability and high speed.

### BRIEF DESCRIPTION OF THE DRAWINGS

Figure 1 schematically illustrates a flow chart of a method for transmitting uplink resources according to an embodiment;
Figure 2 is a schematic diagram of positions of uplink resources in the time domain according to an embodiment;
Figure 3 is a schematic diagram of positions of uplink resources in the time domain according to another embodiment;
Figures 4 schematically illustrates a flow chart of a method for transmitting uplink resources according to another embodiment;
Figure 5 is a schematic diagram of positions of uplink resources in the time domain according to another embodiment;
Figure 6 is a schematic diagram of positions of uplink resources in the time domain according to another embodiment;
Figure 7 is a schematic diagram of positions of uplink resources in the time domain according to another embodiment;
Figure 8 is a structural diagram of a device for transmitting uplink resources according to an embodiment; and
Figure 9 is a structural diagram of a device for transmitting uplink resources according to another embodiment.

### DETAILED DESCRIPTION

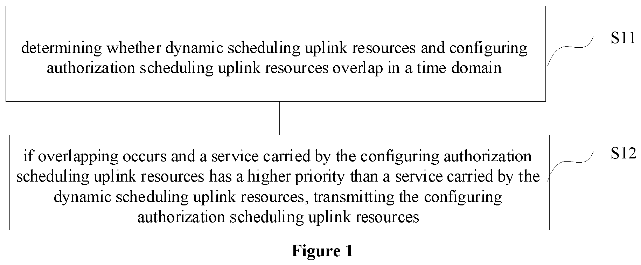

Referring to Figure 1, Figure 1 schematically illustrates a flow chart of a method for transmitting uplink resources according to an embodiment.

Referring to Figure 1, in S11, whether dynamic scheduling uplink resources and configuring authorization scheduling uplink resources overlap in a time domain is determined.

In some embodiments, uplink resources may be sent to a base station in two ways: dynamic scheduling or configuring authorization scheduling, where the uplink resources may be a Physical Uplink Shared Channel (PUSCH). The dynamic scheduling means to inform transmission resources and transmission characteristics (such as an antenna port) of the PUSCH through a Physical Downlink Control Channel; the configuring authorization scheduling means to inform a UE of time-frequency domain resources that may be used to transmit the PUSCH by configuring a high-level signaling (such as a Radio Resource Control signaling) or using a high-level signaling combined with a Downlink Control Information (DCI).

In some embodiments, services associated with dynamic scheduling uplink resources and configuring authorization scheduling uplink resources have different types. Specifically, the UE may need to send a service with a higher priority and a lower delay, but a delay of the service may not meet the sending standard or a Transport Block Size is too small, then the service cannot be sent on the dynamic scheduling uplink resources and can only be sent on corresponding configuring authorization scheduling uplink resources.

In some embodiments, the UE determines whether the dynamic scheduling uplink resources and the configuring authorization scheduling uplink resources overlap in a time domain. If no overlapping occurs, the UE may send the dynamic scheduling uplink resources and the configuring authorization scheduling uplink resources respectively.

In S12, if overlapping occurs and a service carried by the configuring authorization scheduling uplink resources has a higher priority than a service carried by the dynamic scheduling uplink resources, the configuring authorization scheduling uplink resources are transmitted.

In some embodiments, if the priority of the service carried by the configuring authorization scheduling uplink resources is higher than the priority of the service carried by the dynamic scheduling uplink resources, for example, when the UE needs to transmit a service with a higher priority on the configuring authorization scheduling uplink resources, the configuring authorization scheduling uplink resources are transmitted.

In some embodiments, the service carried by the configuring authorization scheduling uplink resources includes: an Ultra Reliable & Low Latency Communication (URLLC).

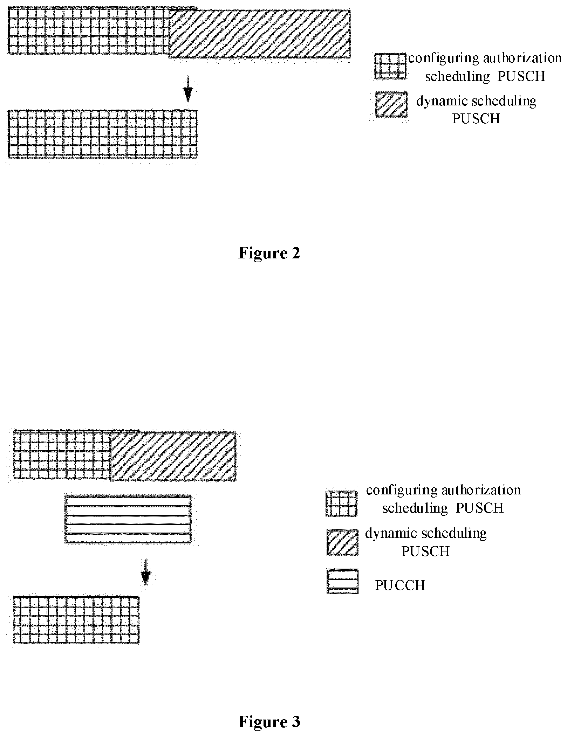

Referring to Figure 2, Figure 2 is a schematic diagram of positions of uplink resources in the time domain according to an embodiment.

In some embodiments, as shown in Figure 2, dynamic scheduling uplink resources (for example, a dynamic scheduling PUSCH) and configuring authorization scheduling uplink resources (for example, a configuring authorization scheduling PUSCH) overlap in the time domain; when a service carried by the configuring authorization scheduling uplink resources has a higher priority, the UE sends the configuring authorization scheduling uplink resources rather than the dynamic scheduling uplink resources.

In some embodiments, transmitting the configuring authorization scheduling uplink resources includes: if the dynamic scheduling uplink resources include an aperiodic Channel State Information (CSI), multiplexing the aperiodic CSI on the configuring authorization scheduling uplink resources, and then transmitting the configuring authorization scheduling uplink resources. Therefore, even if the UE does not send the dynamic scheduling uplink resources, the base station can still receive the aperiodic CSI through the configuring authorization scheduling uplink resources, so as to obtain propagation characteristics of a communication link, such as signal scattering, environmental fading and distance attenuation, which facilitates providing communications with high reliability and high speed.

Referring to Figure 3, Figure 3 is a schematic diagram of positions of uplink resources in the time domain according to another embodiment.

In some embodiments, transmitting the configuring authorization scheduling uplink resources further includes: determining whether there is a physical uplink control channel which overlaps with the configuring authorization scheduling uplink resources in the time domain; and if yes, preferentially multiplexing an Uplink Control Information (UCI) in the physical uplink control channel to the configuring authorization scheduling uplink resources which carry the aperiodic CSI, and then transmitting the configuring authorization scheduling uplink resources.

Specifically, as shown in Figure 3, the dynamic scheduling uplink resources and the configuring authorization scheduling uplink resources overlap in the time domain, and the physical uplink control channel and the configuring authorization scheduling uplink resources also overlap in the time domain, then the UCI is preferentially multiplexed to the configuring authorization scheduling uplink resources which carry the aperiodic CSI. Therefore, the base station can obtain the UCI through the configuring authorization scheduling uplink resources.

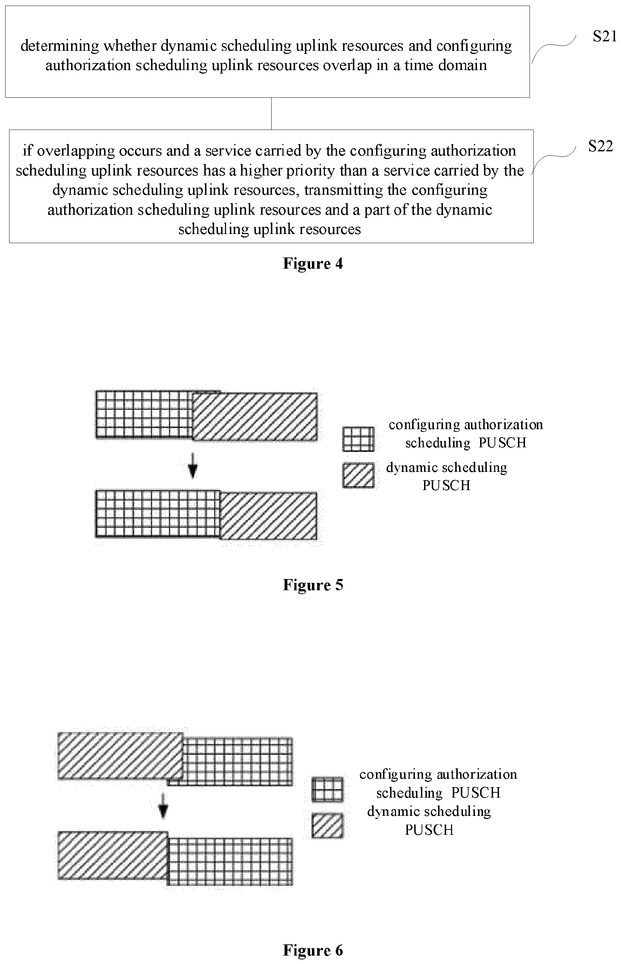

Referring to Figure 4, Figure 4 schematically illustrates a flow chart of a method for transmitting uplink resources according to another embodiment.

In S21, whether dynamic scheduling uplink resources and configuring authorization scheduling uplink resources overlap in a time domain is determined.

In some embodiments, a UE determines whether the dynamic scheduling uplink resources and the configuring authorization scheduling uplink resources overlap in the time domain, and if no, the UE sends the dynamic scheduling uplink resources and the configuring authorization scheduling uplink resources respectively. More details about the dynamic scheduling uplink resources and the configuring authorization scheduling uplink resources can be found in the above descriptions of the method as shown in Figure 1, and are not described here.

In S22, if overlapping occurs and a service carried by the configuring authorization scheduling uplink resources has a higher priority than a service carried by the dynamic scheduling uplink resources, the configuring authorization scheduling uplink resources and a part of the dynamic scheduling uplink resources are transmitted.

The difference between the embodiments as shown in Figure 4 and the embodiments shown in Figure 1 is: when the dynamic scheduling uplink resources and the configuring authorization scheduling uplink resources overlap in the time domain and the configuring authorization scheduling uplink resources carry a service with a higher priority, the UE not only sends the configuring authorization scheduling uplink resources, but also sends the part of the dynamic scheduling uplink resources. Therefore, the base station can receive as much information of the uplink channel as possible, which facilitates improving communication quality.

In some embodiments, the service carried by the configuring authorization scheduling uplink resources includes: an URLLC.

Referring to Figure 5, Figure 5 is a schematic diagram of positions of uplink resources in the time domain according to another embodiment.

Referring to Figure 5, if the dynamic scheduling uplink resources and the configuring authorization scheduling uplink resources only overlap at a front part of the dynamic scheduling uplink resources, transmitting a part of the dynamic scheduling uplink resources includes: transmitting a non-overlapping part of the dynamic scheduling uplink resources.

In some embodiments, transmitting the configuring authorization scheduling uplink resources includes: if the dynamic scheduling uplink resources includes an aperiodic CSI, multiplexing the aperiodic CSI on the configuring authorization scheduling uplink resources, and then transmitting the configuring authorization scheduling uplink resources.

In some embodiments, transmitting the configuring authorization scheduling uplink resources further includes: determining whether there is a physical uplink control channel which overlaps with the configuring authorization scheduling uplink resources in the time domain; and if yes, preferentially multiplexing an uplink control information in the physical uplink control channel to the configuring authorization scheduling uplink resources which carry the aperiodic channel state information, and then transmitting the configuring authorization scheduling uplink resources.

Referring to Figure 6, Figure 6 is a schematic diagram of positions of uplink resources in the time domain according to another embodiment.

Referring to Figure 6, transmitting a part of the dynamic scheduling uplink resources includes: if the dynamic scheduling uplink resources and the configuring authorization scheduling uplink resources only overlap at a rear part of the dynamic scheduling uplink resources, transmitting a non-overlapping part of the dynamic scheduling uplink resources.

In some embodiments, if the dynamic scheduling uplink resources include an aperiodic CSI, the aperiodic channel state information is transmitted in the dynamic scheduling uplink resources.

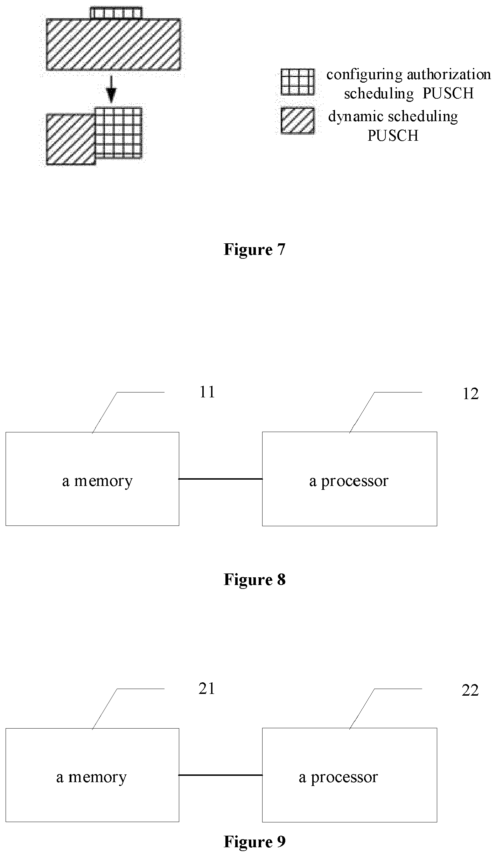

Referring to Figure 7, Figure 7 is a schematic diagram of positions of uplink resources in the time domain according to another embodiment.

Referring to Figure 7, transmitting a part of the dynamic scheduling uplink resources includes: if the dynamic scheduling uplink resources and the configuring authorization scheduling uplink resources only overlap at a middle part of the dynamic scheduling uplink resources, transmitting a part of the dynamic scheduling uplink resources before the middle part of the dynamic scheduling uplink resources.

In some embodiments, transmitting the configuring authorization scheduling uplink resources and a part of the dynamic scheduling uplink resources includes: if the dynamic scheduling uplink resources include an aperiodic CSI, multiplexing the aperiodic CSI on the configuring authorization scheduling uplink resources, and then transmitting the configuring authorization scheduling uplink resources.

In some embodiments, transmitting the configuring authorization scheduling uplink resources and a part of the dynamic scheduling uplink resources further includes: determining whether there is a physical uplink control channel which overlaps with the configuring authorization scheduling uplink resources in the time domain; and if yes, preferentially multiplexing an uplink control information in the physical uplink control channel to the configuring authorization scheduling uplink resources which carry the aperiodic channel state information, and then transmitting the configuring authorization scheduling uplink resources.

Figure 8 is a structural diagram of a device for transmitting uplink resources according to an embodiment. Referring to Figure 8, the device for transmitting uplink resources includes a memory 11 and a processor 12, where the memory 11 has computer instructions stored therein, and when the processor 12 executes the computer instructions, the above method for transmitting uplink resources is performed. The memory 11 may include: a Read Only Memory (ROM), a Random Access Memory (RAM), a magnetic disk, an optical disk or the like. The method for transmitting uplink resources can be found in the above descriptions in conjunction with figures, and are not described here.

Figure 8 is a structural diagram of a device for transmitting uplink resources according to an embodiment. Referring to Figure 8, the device for transmitting uplink resources includes a memory 21 and a processor 22, where the memory 21 has computer instructions stored therein, and when the processor 22 executes the computer instructions, the above method for transmitting uplink resources is performed. The memory 21 may include: a ROM, a RAM, a magnetic disk, an optical disk or the like. The method for transmitting uplink resources can be found in the above descriptions in conjunction with figures, and are not described here.

Those skilled in the art can understand that all or a part of the steps in the methods of the above-mentioned embodiments may be performed by a program instructing a relevant hardware. The program may be stored in a computer-readable storage medium, and the storage medium may include: a ROM, a RAM, a magnetic disk, an optical disk or the like.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. A method for transmitting uplink resources, comprising:
determining whether dynamic scheduling uplink resources and configuring authorization scheduling uplink resources overlap in a time domain; and
if overlapping occurs and a service carried by the configuring authorization scheduling uplink resources has a higher priority than a service carried by the dynamic scheduling uplink resources, transmitting the configuring authorization scheduling uplink resources.

2. The method for transmitting uplink resources according to claim 1, wherein transmitting the configuring authorization scheduling uplink resources comprises:
if the dynamic scheduling uplink resources comprise an aperiodic Channel State Information (CSI), multiplexing the aperiodic CSI on the configuring authorization scheduling uplink resources, and then transmitting the configuring authorization scheduling uplink resources.

3. The method for transmitting uplink resources according to claim 2, wherein transmitting the configuring authorization scheduling uplink resources further comprises:
determining whether there is a physical uplink control channel which overlaps with the configuring authorization scheduling uplink resources in the time domain; and
if yes, preferentially multiplexing an Uplink Control Information (UCI) in the physical uplink control channel to the configuring authorization scheduling uplink resources which carry the aperiodic CSI, and then transmitting the configuring authorization scheduling uplink resources.

4. The method for transmitting uplink resources according to claim 1, wherein the service carried by the configuring authorization scheduling uplink resources comprises: an Ultra Reliable & Low Latency Communication (URLLC).

5. The method for transmitting uplink resources according to claim 1, wherein after determining whether the dynamic scheduling uplink resources and the configuring authorization scheduling uplink resources overlap in the time domain, the method further comprises:
If no, transmitting the dynamic scheduling uplink resources and the configuring authorization scheduling uplink resources respectively.

6. A method for transmitting uplink resources, comprising:
determining whether dynamic scheduling uplink resources and configuring authorization scheduling uplink resources overlap in a time domain; and
if overlapping occurs and a service carried by the configuring authorization scheduling uplink resources has a higher priority than a service carried by the dynamic scheduling uplink resources, transmitting the configuring authorization scheduling uplink resources and a part of the dynamic scheduling uplink resources.

7. The method for transmitting uplink resources according to claim 6, wherein transmitting a part of the dynamic scheduling uplink resources comprises:
if the dynamic scheduling uplink resources and the configuring authorization scheduling uplink resources only overlap at a front part of the dynamic scheduling uplink resources, transmitting a non-overlapping part of the dynamic scheduling uplink resources.

8. The method for transmitting uplink resources according to claim 6, wherein transmitting a part of the dynamic scheduling uplink resources comprises:
if the dynamic scheduling uplink resources and the configuring authorization scheduling uplink resources only overlap at a rear part of the dynamic scheduling uplink resources, transmitting a non-overlapping part of the dynamic scheduling uplink resources.

9. The method for transmitting uplink resources according to claim 8, wherein
if the dynamic scheduling uplink resources comprises an aperiodic Channel State Information (CSI), transmitting the aperiodic CSI in the dynamic scheduling uplink resources.

10. The method for transmitting uplink resources according to claim 6, wherein transmitting a part of the dynamic scheduling uplink resources comprises:
if the dynamic scheduling uplink resources and the configuring authorization scheduling uplink resources only overlap at a middle part of the dynamic scheduling uplink resources, transmitting a part of the dynamic scheduling uplink resources before the middle part of the dynamic scheduling uplink resources.

11. The method for transmitting uplink resources according to claim 7 or 10, wherein transmitting the configuring authorization scheduling uplink resources and a part of the dynamic scheduling uplink resources comprises:
if the dynamic scheduling uplink resources comprise an aperiodic Channel State Information (CSI), multiplexing the aperiodic CSI on the configuring authorization scheduling uplink resources, and then transmitting the configuring authorization scheduling uplink resources.

12. The method for transmitting uplink resources according to claim 11, wherein transmitting the configuring authorization scheduling uplink resources and a part of the dynamic scheduling uplink resources further comprises:
determining whether there is a physical uplink control channel which overlaps with the configuring authorization scheduling uplink resources in the time domain; and
if yes, preferentially multiplexing an Uplink Control Information (UCI) in the physical uplink control channel to the configuring authorization scheduling uplink resources which carry the aperiodic CSI, and then transmitting the configuring authorization scheduling uplink resources.

13. The method for transmitting uplink resources according to claim 6, wherein the service carried by the configuring authorization scheduling uplink resources comprises: an Ultra Reliable & Low Latency Communication (URLLC).

14. The method for transmitting uplink resources according to claim 6, wherein after determining whether the dynamic scheduling uplink resources and the configuring authorization scheduling uplink resources overlap in the time domain, the method further comprises:
If no, transmitting the dynamic scheduling uplink resources and the configuring authorization scheduling uplink resources respectively.

15. A device for transmitting uplink resources, comprising a memory and a processor, wherein the memory has computer instructions stored therein, and when the processor executes the computer instructions, the method according to any one of claims 1 to 5 is performed.

16. A device for transmitting uplink resources, comprising a memory and a processor, wherein the memory has computer instructions stored therein, and when the processor executes the computer instructions, the method according to any one of claims 6 to 14 is performed.
